# EUROPEAN PATENT APPLICATION

(11) **EP 4 645 405 A1**
(43) Date of publication of application: **05.11.2025**
(21) Application number: 24913269.7
(22) Date of filing: 26.08.2024
(51) Int. Cl.: H01M 4/04, B23K 26/362, B23K 26/16, B23K 26/70, B23K 101/36, B23K 101/00

(54) **ELECTRODE PRODUCTION APPARATUS AND BATTERY CELLS COMPRISING ELECTRODES PRODUCED THEREBY, AND BATTERY PACK AND VEHICLE COMPRISING BATTERY CELLS**

(30) Priority: 26.12.2023 KR 20230191778; 15.02.2024 KR 20240022072
(71) Applicant: LG Energy Solution, Ltd., Seoul 07335 (KR)
(72) Inventor: KIM, Sang-Yeol, Daejeon 34122 (KR); PARK, Sang-Rin, Daejeon 34122 (KR); PARK, Jong-Sik, Daejeon 34122 (KR)
(74) Representative: Goddar, Heinz J.
(86) International application number: PCT/KR2024/012728
(87) International publication number: WO 2025/143428

(57) **Abstract**

Disclosed are an electrode production device and a battery cell including an electrode produced using the same, and a battery pack and a vehicle including the battery cell. An electrode production device according to an embodiment of the present disclosure includes a transfer member that transfers an electrode foil coated with an electrode active material; a laser member that irradiates a laser toward the electrode foil; a jig member that is disposed in contact with the electrode foil to support the electrode foil; and a foreign matter blocking member that blocks foreign matter generated when irradiating the laser from flowing into a preset portion of the electrode foil.

## Description

### TECHNICAL FIELD

This application is based on and claims priority from Korean Patent Application No. 10-2023-0191778, filed on December 26, 2023 and Korean Patent Application No. 10-2024-0022072, filed on February 15, 2024, with the Korean Intellectual Property Office, the disclosure of which is incorporated herein in its entirety by reference.

The present disclosure relates to an electrode production device and a battery cell including an electrode produced using the same, and a battery pack and a vehicle including the battery cell, and more specifically, to an electrode production device capable of improving electrode quality and a battery cell including an electrode produced using the same, and a battery pack and a vehicle including the battery cell.

### BACKGROUND ART

In general, a secondary battery refers to a battery that can be repeatedly charged and discharged, such as a lithium-ion battery, a lithium polymer battery, a nickel cadmium battery, a nickel hydrogen battery, a nickel zinc battery, and the like.

Depending on the shape of the battery case, a secondary battery may be classified into a cylindrical battery and a prismatic battery in which the electrode assembly is embedded in a cylindrical or prismatic metal can, and a pouch-type battery in which the electrode assembly is embedded in a pouch-type case made of an aluminum laminate sheet.

Such a secondary battery may be manufactured by accommodating an electrode assembly including a positive electrode and a negative electrode that are mutually stacked with a separator interposed therebetween, and an electrolyte material in a case of various shapes, and sealing the case.

The electrode (positive electrode or negative electrode) of the secondary battery may include a coated portion where a coating layer of an electrode active material is formed by pressing an electrode mixture on the surface of an electrode foil, and an uncoated portion where the coating layer is not formed.

Meanwhile, the electrode of the secondary battery may be produced through a roll-to-roll process in which an electrode foil having a coating layer of an electrode active material formed on the surface is manufactured by being wound around a roll and a roll and moved. And, the electrode may be partially cut to manufacture the electrode assembly, and for example, the electrode may be cut by a laser.

Here, when cutting the electrode using a laser, foreign matter (e.g., fume) is generated during the cutting process, and if the foreign matter generated in this way flows into the coated portion (coating layer of the electrode active material), there is a problem of causing a defect in the electrode.

### DISCLOSURE

### Technical Problem

The present disclosure is designed to solve the problems of the related art, and therefore the present disclosure is directed to providing an electrode production device capable of preventing foreign matter from flowing into a preset portion (e.g., a coated portion) of the electrode foil when cutting the electrode foil, and a battery cell including an electrode produced using the same, and a battery pack and a vehicle including the battery cell.

The present disclosure is also directed to providing an electrode production device capable of preventing foreign matter from flowing into a preset portion of the electrode foil, thereby preventing defects in the electrode and ultimately improving electrode quality, and a battery cell including an electrode produced using the same, and a battery pack and a vehicle including the battery cell.

However, technical problems to be solved by the present disclosure are not limited to the above-described problems, and other problems not mentioned herein may be clearly understood by those skilled in the art from the following description of the present disclosure.

### Technical Solution

According to one aspect of the present disclosure, there may be provided an electrode production device including a transfer member that transfers an electrode foil coated with an electrode active material; a laser member that irradiates a laser toward the electrode foil; a jig member that is disposed in contact with the electrode foil to support the electrode foil; and a foreign matter blocking member that blocks foreign matter generated when irradiating the laser from flowing into a preset portion of the electrode foil.

In an embodiment, the electrode foil may include a coated portion coated with an electrode active material and an uncoated portion not coated with an electrode active material, and the foreign matter blocking member may be disposed close to the boundary line between the coated portion and the uncoated portion to block the foreign matter from flowing into the coated portion.

In an embodiment, the jig member may include a first portion disposed in an upward and downward direction and having an inner groove formed therein; a second portion coupled to the upper side of the first portion, respectively; and a third portion coupled to the lower side of the first portion, respectively.

In an embodiment, a through hole through which the foreign matter may pass may be formed in at least one of the second portion and the third portion.

In an embodiment, a foreign matter discharge unit through which the foreign matter passing through the through hole is discharged may be coupled to at least one of the second portion and the third portion.

In an embodiment, first curved portions may be formed in the second portion and the third portion, and the foreign matter blocking member may have a second curved portion formed to correspond to the first curved portions.

In an embodiment, the curvature of the second curved portion may be formed to be greater than or equal to the curvature of the first curved portions.

In an embodiment, a coating portion for preventing the foreign matter from sticking may be formed on the second curved portion.

In an embodiment, to prevent damage to the foreign matter blocking member by a laser irradiated from the laser member, the foreign matter blocking member may be disposed at an inclined angle.

In an embodiment, the foreign matter blocking member may be formed with a slope that widens outward from the jig member toward the laser member.

In an embodiment, a suction member may be provided to suck the foreign matter.

In an embodiment, a seating groove in which the suction member may be seated may be formed on the jig member.

In an embodiment, the transfer member may include a first transfer roll disposed at the upper side; and a second transfer roll disposed at the lower side, wherein the electrode foil may move from the upper side to the lower side by the first transfer roll and the second transfer roll.

In an embodiment, the laser member may irradiate the laser in a horizontal direction toward the electrode foil.

Meanwhile, according to another aspect of the present disclosure, there may be provided a battery cell including an electrode produced using an electrode production device described above, there may also be provided a battery pack including at least one battery cell described above, and there may also be provided a vehicle including at least one battery cell described above.

### Advantageous Effects

The embodiments of the present disclosure have the effect of preventing foreign matter from flowing into a preset portion (e.g., a coated portion) of the electrode foil when cutting the electrode foil.

Additionally, by preventing foreign matter from flowing into a preset portion of the electrode foil, there is an effect of preventing defects in the electrode and ultimately improving electrode quality.

However, the effects to be obtained by the present disclosure are not limited to the above-described effects, and other technical effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic front view of an electrode production device according to an embodiment of the present disclosure.
FIG. 2 is a view viewed along the direction of arrow A of FIG. 1, and a transfer member, an electrode foil, and a laser member are omitted.
FIG. 3 is a perspective view viewed along the direction of arrow B of FIG. 2.
FIG. 4 is an exploded perspective view of FIG. 3.
FIG. 5 is a view viewed along the direction of arrow C of FIG. 3.
FIG. 6 is a view viewed along the direction of arrow D of FIG. 3.
FIG. 7 is a view showing a state in which a foreign matter blocking member is disposed close to a boundary line between a coated portion and an uncoated portion in an electrode production device according to an embodiment of the present disclosure.
FIG. 8 is a perspective view of a foreign matter blocking member in an electrode production device according to an embodiment of the present disclosure.
FIG. 9 is a perspective view of a jig member in an electrode production device according to an embodiment of the present disclosure.
FIG. 10 is a view viewed along a different direction of FIG. 9.
FIG. 11 is a perspective view of an electrode production device according to a modified embodiment of the present disclosure.
FIG. 12 is an exploded perspective view of FIG. 11.
FIG. 13 is a view viewed along the direction of arrow E of FIG. 11.
FIG. 14 is a view schematically showing the configuration of a battery pack including a battery cell provided with an electrode produced using an electrode production device according to each embodiment of the present disclosure.
FIG. 15 is a view for describing a vehicle including the battery pack of FIG. 14.

### BEST MODE

Hereinafter, preferred embodiments of the present disclosure will be described in detail with reference to the accompanying drawings. The terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

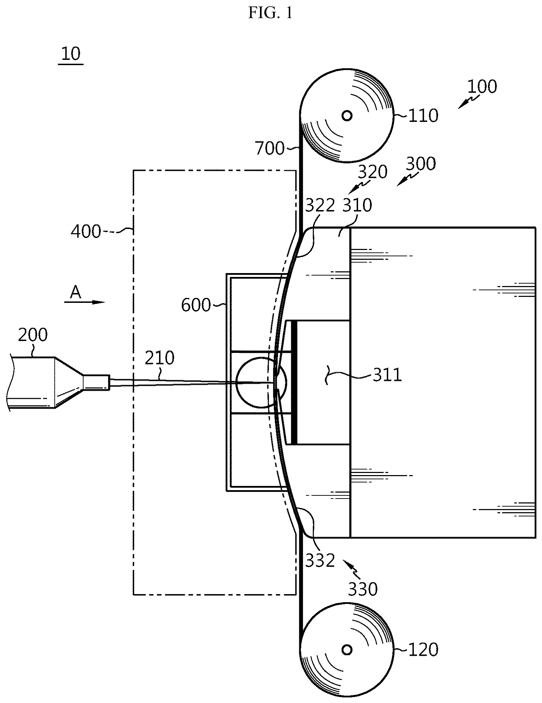

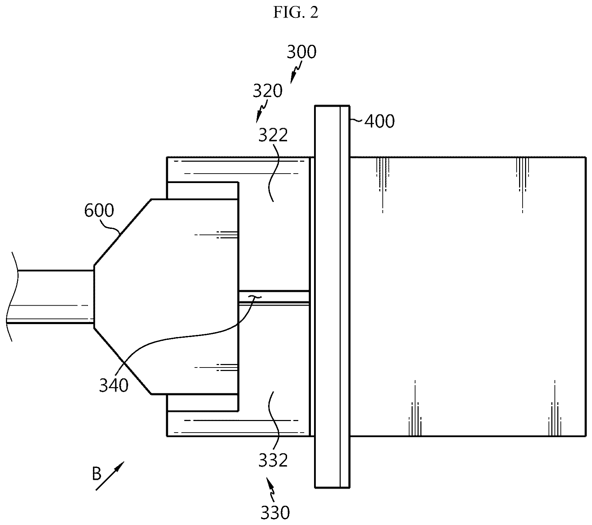

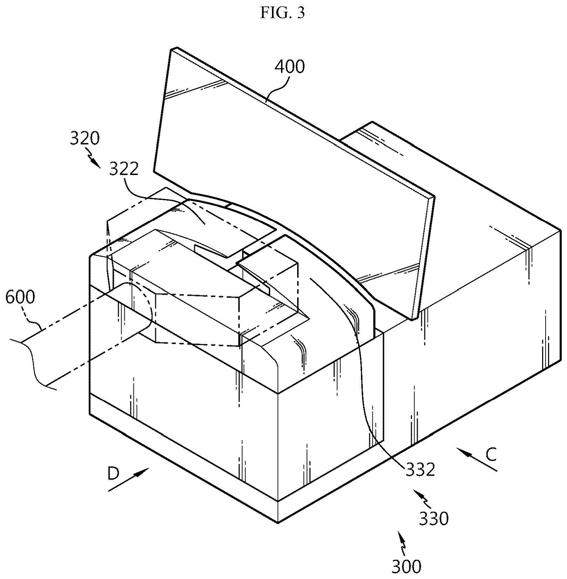

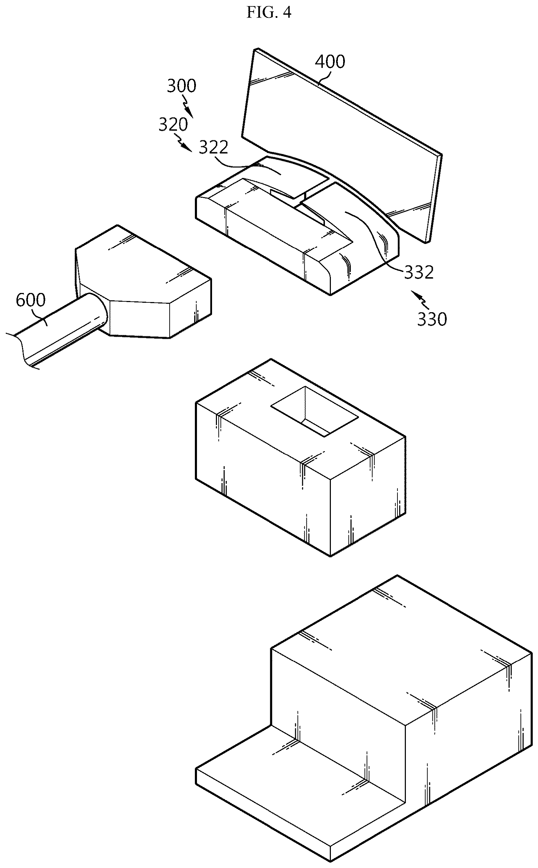

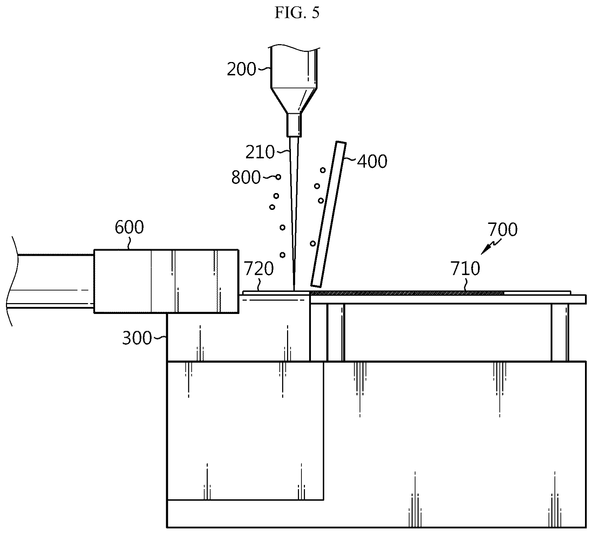

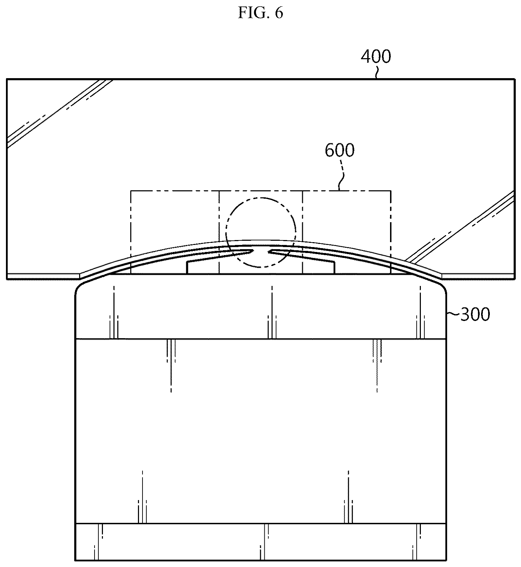

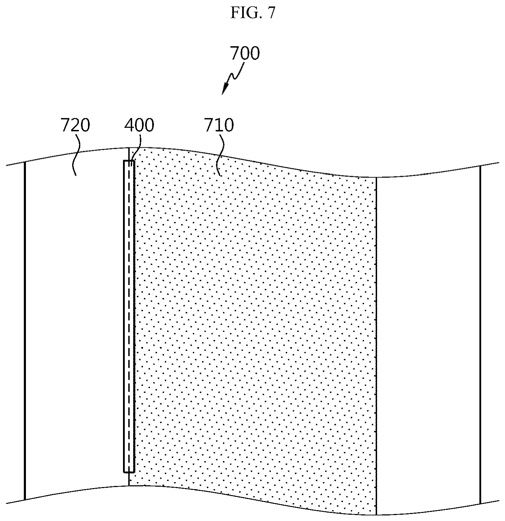

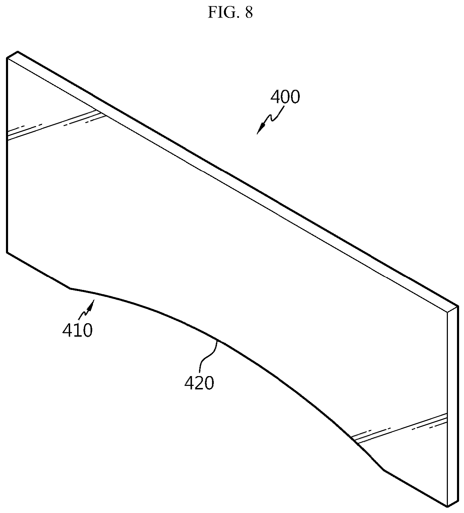

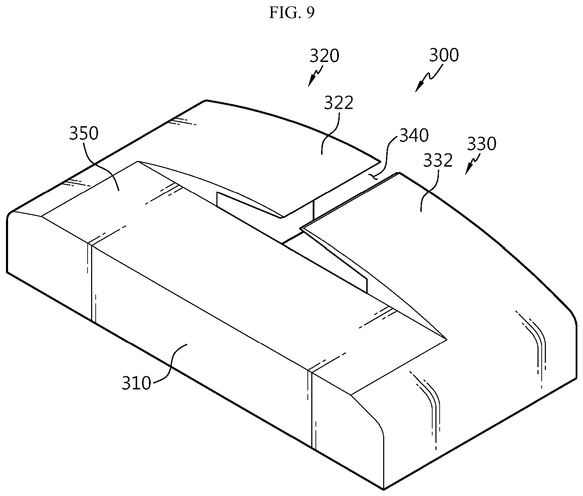

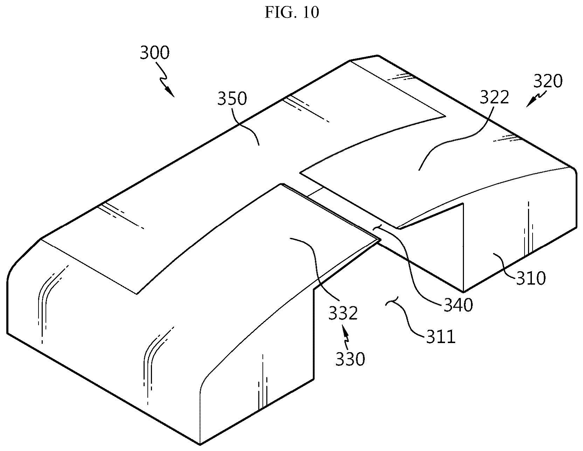

FIG. 1 is a schematic front view of an electrode production device according to an embodiment of the present disclosure, FIG. 2 is a view viewed along the direction of arrow A of FIG. 1, and a transfer member, an electrode foil, and a laser member are omitted, FIG. 3 is a perspective view viewed along the direction of arrow B of FIG. 2, FIG. 4 is an exploded perspective view of FIG. 3, FIG. 5 is a view viewed along the direction of arrow C of FIG. 3, FIG. 6 is a view viewed along the direction of arrow D of FIG. 3, FIG. 7 is a view showing a state in which a foreign matter blocking member is disposed close to a boundary line between a coated portion and an uncoated portion in an electrode production device according to an embodiment of the present disclosure, FIG. 8 is a perspective view of a foreign matter blocking member in an electrode production device according to an embodiment of the present disclosure, FIG. 9 is a perspective view of a jig member in an electrode production device according to an embodiment of the present disclosure, and FIG. 10 is a view viewed along a different direction of FIG. 9.

Referring to FIG. 1, an electrode production device 10 according to an embodiment of the present disclosure relates to a device for producing an electrode (positive electrode or negative electrode) by transferring an electrode foil 700 on which a coating layer is formed by an electrode active material. The electrode is a concept that includes both a wet electrode and a dry electrode.

For example, the wet electrode is manufactured through a process of applying an electrode mixture in a slurry state including a solvent to the surface of an electrode substrate such as the electrode foil 700 to form a coating layer and drying the coating layer.

And, the dry electrode is manufactured through a process of pressing an electrode mixture in a powder (powder mixture) state that does not include a solvent onto the surface of the electrode foil 700 to form a coating layer. That is, the electrode mixture is mixed without a liquid medium such as a solvent or dispersion medium, and then the electrode mixture in a powder state is manufactured by pressing while passing it through a rolling roll.

Here, referring to FIG. 7, the electrode foil 700 may include a coated portion 710 in which a coating layer of an electrode active material is formed on the surface, and an uncoated portion 720 (e.g., both ends of the electrode foil 700) in which the coating layer of an electrode active material is not formed.

Referring to FIG. 5, the electrode production device 10 according to an embodiment of the present disclosure relates to a device capable of blocking foreign matter 800 generated when irradiating a laser 210 from flowing into a preset portion of the electrode foil 700, for example, a coated portion 710 coated with an electrode active material. This will be described in detail below.

Referring to FIG. 1, the electrode production device 10 according to an embodiment of the present disclosure may be configured to include a transfer member 100, a laser member 200, a jig member 300, and a foreign matter blocking member 400.

The transfer member 100 transfers the electrode foil 700 coated with an electrode active material. The transfer member 100 may be various, and may include, for example, a plurality of rollers to transfer the electrode foil 700 in a roll-to-roll method. The transfer member 100 is not limited thereto, but hereinafter, an embodiment in which the transfer member 100 includes a plurality of rollers will be described for convenience of description.

Referring to FIG. 1, the transfer member 100 may include a first transfer roll 110 and a second transfer roll 120. Here, the first transfer roll 110 and the second transfer roll 120 may be disposed at various positions, and for example, as in FIG. 1, the first transfer roll 110 may be disposed at the upper side and the second transfer roll 120 may be disposed at the lower side.

In this embodiment, the electrode foil 700 is transferred from the first transfer roll 110 at the upper side to the second transfer roll 120 at the lower side. That is, the electrode foil 700 moves from the upper side to the lower side by the first transfer roll 110 and the second transfer roll 120.

Referring to FIG. 1, the laser member 200 is provided to irradiate the laser 210 toward the electrode foil 700. The laser member 200 may include various types of laser equipment. Referring to FIG. 1, when the electrode foil 700 is moved from the upper side to the lower side by the first transfer roll 110 and the second transfer roll 120, the laser member 200 may be configured to irradiate the laser 210 in a horizontal direction based on FIG. 1 toward the electrode foil 700.

Referring to FIG. 1, the jig member 300 is disposed in contact with the electrode foil 700 to support the electrode foil 700. The jig member 300 may prevent the electrode foil 700 from trembling or shaking when the electrode foil 700 is cut by the laser member 200, thereby preventing cutting defects such as uneven cutting or cutting of a portion different from a preset portion when cutting the electrode foil 700 by the laser member 200.

The jig member 300 may be configured in various ways, and may include, for example, a first portion 310, a second portion 320, and a third portion 330. Here, the first portion 310, the second portion 320, and the third portion 330 are merely formal distinctions of the jig member 300 for convenience of description, and the distinction criteria for the first portion 310, the second portion 320, and the third portion 330 are not clear. For example, the first portion 310, the second portion 320, and the third portion 330 may be manufactured separately and then coupled to each other to form the jig member 300, but the first portion 310, the second portion 320, and the third portion 330 may also be formed integrally from the manufacturing stage.

Referring to FIG. 1, the first portion 310 is disposed in an upward and downward direction. And, an inner groove 311 may be formed in the first portion 310. Here, the inner groove 311 may be formed across the first portion 310, the second portion 320, and the third portion 330.

The second portion 320 is coupled to the first portion 310 at the upper side of the third portion 330 based on FIG. 1. And, the third portion 330 is coupled to the first portion 310 at the lower side of the second portion 320 based on FIG. 1.

That is, based on FIG. 1, the second portion 320 is disposed at the upper side, and the third portion 330 is disposed at the lower side, and each of them is coupled to the first portion 310. Here, the laser member 200 may irradiate the laser 210 to the part where the gap 340 (see FIG. 2) between the second portion 320 and the third portion 330 is located.

Referring to FIG. 5, the foreign matter blocking member 400 is configured to block foreign matter 800 generated when irradiating the laser 210 from flowing into a preset portion of the electrode foil 700.

For example, as described above, when the electrode foil 700 includes a coated portion 710 coated with an electrode active material and an uncoated portion 720 not coated with an electrode active material, the foreign matter blocking member 400 may be configured to be disposed close to the boundary line between the coated portion 710 and the uncoated portion 720 (see FIG. 7) to block foreign matter 800 from flowing into the coated portion 710.

Referring to FIGS. 3, 6, and 8 together, a second curved portion 410 may be formed in the foreign matter blocking member 400. Referring to FIGS. 1, 9, and 10, first curved portions 322, 332 may be formed in the second portion 320 and the third portion 330 of the jig member 300. And, the second curved portion 410 of the foreign matter blocking member 400 is formed to correspond to the first curved portions 322, 332 formed in the second portion 320 and the third portion 330.

That is, when the first curved portions 322, 332 are formed in each of the second portion 320 and the third portion 330, if the second curved portion 410 is formed in the foreign matter blocking member 400, there is an effect of preventing interference between the foreign matter blocking member 400 and the second portion 320 and the third portion 330 of the jig member 300.

To this end, the curvature of the second curved portion 410 may be formed to be greater than or equal to the curvature of the first curved portions 322, 332. However, the present disclosure is not limited thereto. That is, even if the curvature of the second curved portion 410 is smaller than that of the first curved portions 322, 332, interference with the jig member 300 may be prevented by adjusting the position of the foreign matter blocking member 400.

Here, as shown in FIG. 8, a coating portion 420 for preventing the foreign matter 800 from sticking may be formed on the second curved portion 410. Based on FIG. 8, the coating portion 420 may be formed only on the lower side of the foreign matter blocking member 400, or the coating portion 420 may be formed only on the lower side of the foreign matter blocking member 400 and a portion of the side surface of the foreign matter blocking member 400, or the coating portion 420 may be formed on the entire foreign matter blocking member 400.

And, the foreign matter blocking member 400 may be made of a transparent or translucent material to allow the movement of the foreign matter 800 to be observed, but is not limited thereto. That is, the foreign matter blocking member 400 may be made of an opaque material.

Referring to FIGS. 3 and 5, the foreign matter blocking member 400 may be disposed at an inclined angle. The foreign matter blocking member 400 may be damaged by the laser 210 irradiated from the laser member 200, and to prevent such damage to the foreign matter blocking member 400, the foreign matter blocking member 400 may be obliquely disposed at a preset angle.

For example, as shown in FIG. 5, the foreign matter blocking member 400 may be formed with a slope that widens outward (to the right based on FIG. 5) from the jig member 300 toward the laser member 200, and accordingly, there is an effect of preventing damage to the foreign matter blocking member 400 by the laser 210. Additionally, interference with the progress of the laser 210 by the foreign matter blocking member 400 may be prevented.

As described above, in the embodiments of the present disclosure, the foreign matter blocking member 400 prevents foreign matter 800 from flowing into, for example, the coated portion 710 of the electrode foil 700 when cutting the electrode foil 700, thereby having the effect of preventing defects in the electrode and ultimately improving electrode quality.

Referring to FIGS. 1 and 2, a suction member 600 is provided to suck the foreign matter 800. The suction member 600 may be configured in various ways, and may include, for example, various suction devices (e.g., vacuum suction devices).

As in FIG. 2, the suction member 600 may be seated on the jig member 300, and to this end, as in FIG. 4, a seating groove 350 in which the suction member 600 may be seated may be formed on the jig member 300.

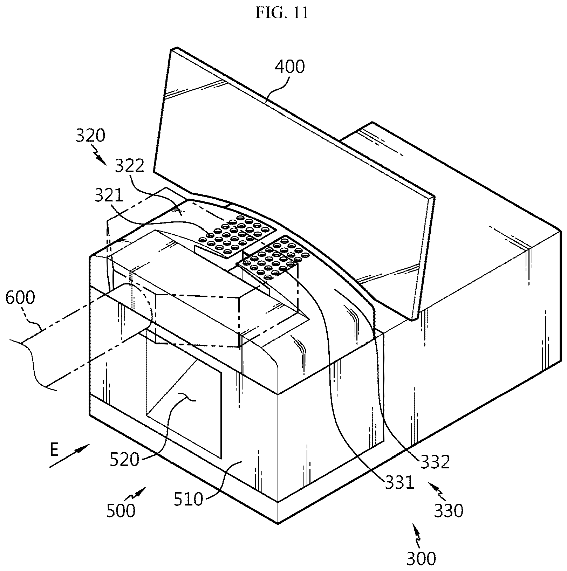

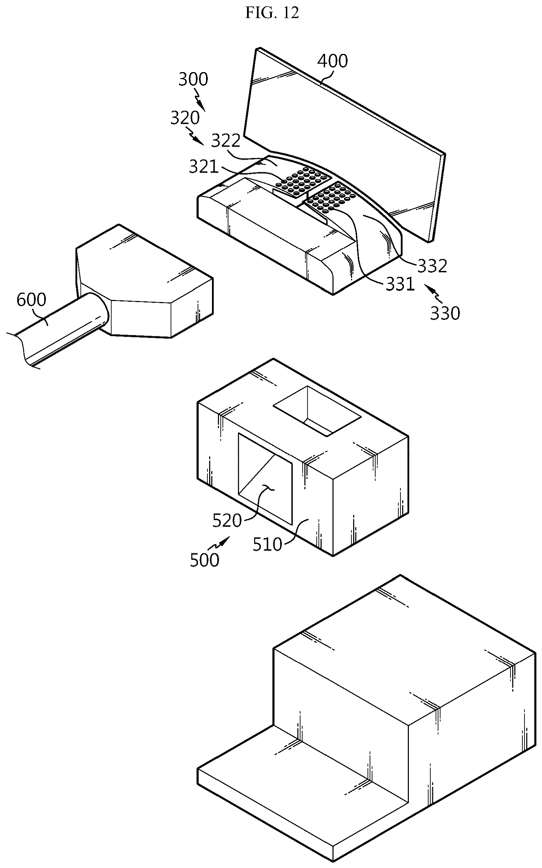

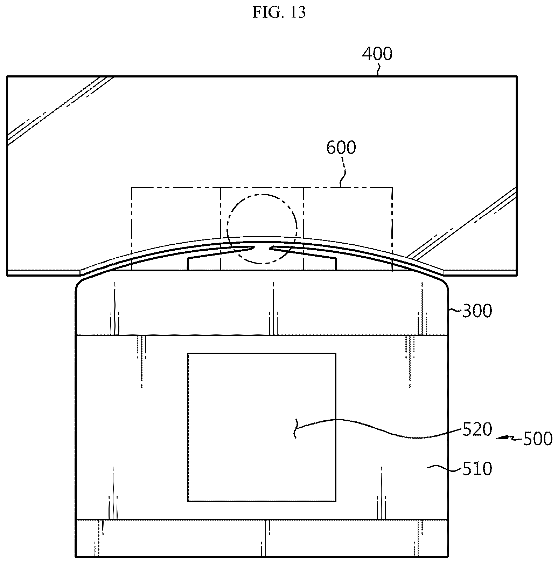

FIG. 11 is a perspective view of an electrode production device according to a modified embodiment of the present disclosure, FIG. 12 is an exploded perspective view of FIG. 11, and FIG. 13 is a view viewed along the direction of arrow E of FIG. 11.

The modified embodiment of the present disclosure differs in configuration from the first embodiment in that through holes 321, 331 are formed in the jig member 300. Additionally, there is a difference in configuration in that a foreign matter discharge unit 500 is coupled to the jig member 300.

Here, the contents common to the part described in the first embodiment are replaced with the description of the first embodiment described above. Additionally, the contents applicable to the first embodiment among the parts described in the second embodiment may be applied to the first embodiment.

Referring to FIGS. 11 and 12 together, through holes 321, 331 through which the foreign matter 800 may pass may be formed in at least one of the second portion 320 and the third portion 330. The through holes 321, 331 may be one large hole, or a plurality of holes may be arranged in various ways.

And, referring to FIGS. 11, 12, and 13 together, the foreign matter discharge unit 500 may be coupled to the jig member 300. The foreign matter discharge unit 500 may include a discharge body 510 coupled to the jig member 300 and a discharge hole 520 formed in the discharge body 510.

Here, at least one of the second portion 320 and the third portion 330 of the jig member 300 is coupled to the foreign matter discharge unit 500, and the foreign matter 800 passing through the through holes 321, 331 formed in at least one of the second portion 320 and the third portion 330 may be discharged through the discharge hole 520 of the foreign matter discharge unit 500. In this case, the through holes 321, 331 of the second portion 320 and the third portion 330 and the discharge hole 520 of the foreign matter discharge unit 500 are configured to communicate with each other. And, a suction member (not shown) may be coupled to the discharge hole 520.

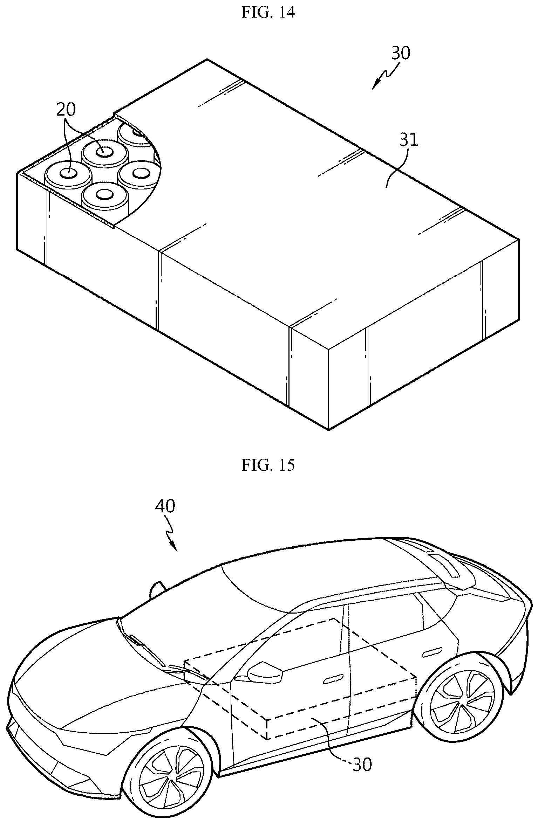

FIG. 14 is a view schematically showing the configuration of a battery pack including a battery cell provided with an electrode produced using an electrode production device according to each embodiment of the present disclosure.

Referring to FIG. 14, a battery pack 30 according to an embodiment of the present disclosure may include one or more battery cells 20. Here, the battery cell 20 includes an electrode produced using the electrode production device 10 according to each embodiment of the present disclosure as described above.

Additionally, the battery pack 30 may further include a pack housing 300 for accommodating the battery cell 20, various devices for controlling the charging and discharging of the battery cell 20, such as a BMS, a current sensor, a fuse, and the like.

Meanwhile, referring to FIG. 14, a cylindrical battery cell is shown inside the pack housing 31, but is not limited thereto, and the battery cell 20 may include a pouch-type battery cell or a prismatic battery cell.

FIG. 15 is a view for describing a vehicle including the battery pack of FIG. 14.

Referring to FIG. 15, a vehicle 40 according to an embodiment of the present disclosure may include one or more battery cells 20 or battery packs 30 including an electrode produced using the electrode production device 10 according to each embodiment of the present disclosure. Here, the vehicle 40 includes various types of vehicles designed to use electricity, such as electric vehicles or hybrid vehicles.

The terms indicating directions as used herein such as upper, lower, left, and right are used for convenience of description only, and it is obvious to those skilled in the art that the term may change depending on the position of the stated element or an observer.

The present disclosure has been described hereinabove with reference to a limited number of embodiments and drawings, but the present disclosure is not limited thereto and it is obvious to those skilled in the art that a variety of modifications and changes may be made thereto within the technical aspects of the present disclosure and the equivalent scope of the appended claims. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### INDUSTRIAL APPLICABILITY

The present disclosure relates to an electrode production device and a battery cell including an electrode produced using the same, and a battery pack and a vehicle including the battery cell, and is particularly applicable to industries related to secondary batteries.

## Claims

1. An electrode production device, comprising:
a transfer member that transfers an electrode foil coated with an electrode active material;
a laser member that irradiates a laser toward the electrode foil;
a jig member that is disposed in contact with the electrode foil to support the electrode foil; and
a foreign matter blocking member that blocks foreign matter generated when irradiating the laser from flowing into a preset portion of the electrode foil.

2. The electrode production device according to claim 1,
wherein the electrode foil comprises a coated portion coated with an electrode active material and an uncoated portion not coated with an electrode active material, and
the foreign matter blocking member is disposed close to the boundary line between the coated portion and the uncoated portion to block the foreign matter from flowing into the coated portion.

3. The electrode production device according to claim 1,
wherein the jig member comprises:
a first portion disposed in an upward and downward direction and having an inner groove formed therein;
a second portion coupled to the upper side of the first portion, respectively; and
a third portion coupled to the lower side of the first portion, respectively.

4. The electrode production device according to claim 3,
wherein a through hole through which the foreign matter may pass is formed in at least one of the second portion and the third portion.

5. The electrode production device according to claim 4,
wherein a foreign matter discharge unit through which the foreign matter passing through the through hole is discharged is coupled to at least one of the second portion and the third portion.

6. The electrode production device according to claim 3,
wherein first curved portions are formed in the second portion and the third portion, and
the foreign matter blocking member has a second curved portion formed to correspond to the first curved portions.

7. The electrode production device according to claim 6,
wherein the curvature of the second curved portion is formed to be greater than or equal to the curvature of the first curved portions.

8. The electrode production device according to claim 6,
wherein a coating portion for preventing the foreign matter from sticking is formed on the second curved portion.

9. The electrode production device according to claim 1,
wherein to prevent damage to the foreign matter blocking member by a laser irradiated from the laser member, the foreign matter blocking member is disposed at an inclined angle.

10. The electrode production device according to claim 9,
wherein the foreign matter blocking member is formed with a slope that widens outward from the jig member toward the laser member.

11. The electrode production device according to claim 1,
wherein a suction member is provided to suck the foreign matter.

12. The electrode production device according to claim 11,
wherein a seating groove in which the suction member may be seated is formed on the jig member.

13. The electrode production device according to claim 1,
wherein the transfer member comprises:
a first transfer roll disposed at the upper side; and
a second transfer roll disposed at the lower side,
wherein the electrode foil moves from the upper side to the lower side by the first transfer roll and the second transfer roll.

14. The electrode production device according to claim 13,
wherein the laser member irradiates the laser in a horizontal direction toward the electrode foil.

15. A battery cell comprising an electrode produced using an electrode production device according to any one of claims 1 to 14.

16. A battery pack comprising at least one battery cell according to claim 15.

17. A vehicle comprising at least one battery cell according to claim 15.
